# EUROPEAN PATENT SPECIFICATION

(11) **EP 4 209 129 B1**
(45) Date of publication and mention of the grant of the patent: **05.11.2025**
(21) Application number: 23150325.1
(22) Date of filing: 04.01.2023
(51) Int. Cl.: A21C 3/04, A21C 11/16, A21C 11/18

(54) **METERING MACHINE FOR METERING AND/OR INJECTING FOOD PRODUCTS**
DOSIERMASCHINE ZUM DOSIEREN UND/ODER INJIZIEREN VON NAHRUNGSMITTELN
MACHINE DE DOSAGE POUR DOSER ET/OU INJECTER DES PRODUITS ALIMENTAIRES

(30) Priority: 05.01.2022 IT 202200000125
(43) Date of publication of application: 12.07.2023
(73) Proprietor: GEA COMAS S.P.A., 36036 Torrebelvicino (Vicenza) (IT)
(72) Inventor: SANTACATTERINA, Sergio, 36036 Torrebelvicino (VI) (IT); LAPO, Dario, 36015 Schio (VI) (IT)
(74) Representative: Dondi, Silvia

(56) References cited:
- EP-A1- 3 512 344
- EP-A2- 2 251 178
- CN-A- 101 862 018
- IT-B- 1 234 903
- US-A1- 2019 208 792

## Description

### Field of application

The object of the present invention is a metering machine for metering and/or injecting food products according to the preamble of the main independent claim.

The present metering machine is intended to be advantageously employed in the field of the food industry for metering and/or injecting, in an at least partially automatic manner, food doughs, such as for example of cookies, muffins, cupcakes or similar products, or of creams or other food products onto suitable conveyor belts for the subsequent operations of baking/cooking and packaging.

The present metering machine is intended to be advantageously employed in the field of the food industry for injecting bakery products after their baking/cooking with products such as creams, marmalades and chocolate.

The metering machine, object of the present invention, is therefore inserted in the industrial field of production of machines for the food industry and, in particular, in the industrial field of production of machines for the confectionary industry.

### State of the art

In the food field, and in particular in the confectionary field, metering machines are known for metering dough food products, which therefore allow dispensing a measured dose of a food dough/paste onto a conveyor belt, for the subsequent steps of baking/cooking and packaging.

More in detail, metering machines are known, for example from the document CN 101862018, which comprise a fixed support structure, intended to be abutted against the ground, and a metering group, which is fixed to the support structure and comprises a hopper, for containing the food product to be metered, and a plurality of dispensing nozzles, hydraulically connected to the hopper and arranged in order to dispense the aforesaid product. The metering group also comprises a plurality of pistons, which are hydraulically interposed between the hopper and the dispensing nozzles in order to suction a measured quantity of the food product contained in the hopper and force the aforesaid measured quantity towards the dispensing nozzles.

More in detail, the pistons are mechanically connected to the support structure and comprise a fixed portion, fixed to the support structure and defining a containment chamber, and a movable stem, slidably associated with the fixed portion and movable between a suction position and a dispensing position.

In particular the movable stems of the pistons of the metering machines of known type are fixed to a movement member, which is usually common to all the movable stems and is mechanically connected to a motor and movable by this along a slide direction parallel to the movement direction of the movable stem in order to move between the suction position and the dispensing position.

The metering machines of known type briefly described up to now have in practice demonstrated that they do not lack drawbacks. The main drawback lies in the fact that such metering machines cannot be easily readapted for the different metering needs and more in detail they cannot be easily readapted in case of size change of the finished product that one wishes to obtain. Indeed, in such case, it is necessary to change the type of dispensing nozzles and in particular mount dispensing nozzles which are provided with a smaller or larger dispensing diameter, depending on the requirements. Indeed, such metering machines of known type are not adapted to allow a size change of the finished product by varying the number of dispensing nozzles, since the movable stems are all fixed to a common movement member and are therefore moved simultaneously by the motor connected to the common movement member between the suction position and the dispensing position. Therefore such metering machines do not allow varying the number of movable stems actuated by the movement member as a function of the variation of the number of dispensing nozzles, as described above, which is a function of the production needs.

The aforesaid metering machine is therefore poorly flexible as a function of the production needs and limited to operate with sizes and speeds that are pre-established and constant over time, on the contrary it does not allow being quickly readapted without long and costly machine stops and manual interventions by specialized operators. Indeed, the aforesaid variation of the number of dispensing nozzles allows varying the hourly production of the finished product, varying the distribution of the product metered on the conveyor belt placed below and allows varying the distribution of the possible containers placed on the conveyor belt, which are adapted to contain the food product metered by the dispensing nozzles.

Also known, from document US 2019/0208792, is a metering machine in which the metering group is provided with a bladed shaft which is placed within a cavity positioned below the hopper and is actuatable to rotate in order to extract the food product from the hopper and force it outside underlying outlet openings.

Also known, from document EP 2251178, is an extruder comprising a screw extruder cylinder internally provided with two work screws actuatable in rotation in order to extrude a pasty product.

Also known from the documents EP 3512344 and IT 1234903 are metering machines whose metering group comprises a pair of counter-rotating rollers placed below the hopper and actuatable in rotation in order to force the food product contained within the hopper towards the dispensing nozzles.

Also the latter solutions of known type have proven to have little flexibility as a function of the variations of the production needs.

### Presentation of the invention

The problem underlying the present invention is therefore that of eliminating the drawbacks of the abovementioned prior art, by providing a metering machine for food products, which allows varying the number of metering pistons moved.

Another object of the present invention is to provide a metering machine for food products, which is easily re-adaptable in the case of size change of the finished product. Another object of the present invention is to provide a metering machine for food products, which allows reducing the machine stops necessary for changing the configuration thereof.

Another object of the present invention is to provide a metering machine for food products, which prevents undesired metering of the food product onto the conveyor belt. Another object of the present invention is to provide a metering machine for food products, which is totally automatic and requires a reduced intervention by an operator. Another object of the present invention is to provide a metering machine for food products, which allows a precise and constant metering of the food product contained in the hopper.

A further object of the present invention is to provide a metering machine for food products, which allows an easy separation of the metering group in order to carry out the cleaning operations.

A further object of the present invention is to provide a metering machine for food products, which is inexpensive to attain.

A further object of the present invention is to provide a metering machine for food products, which is simple and entirely reliable in operation.

These objects and still others are attained by the metering machine for food products according to the present invention.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:

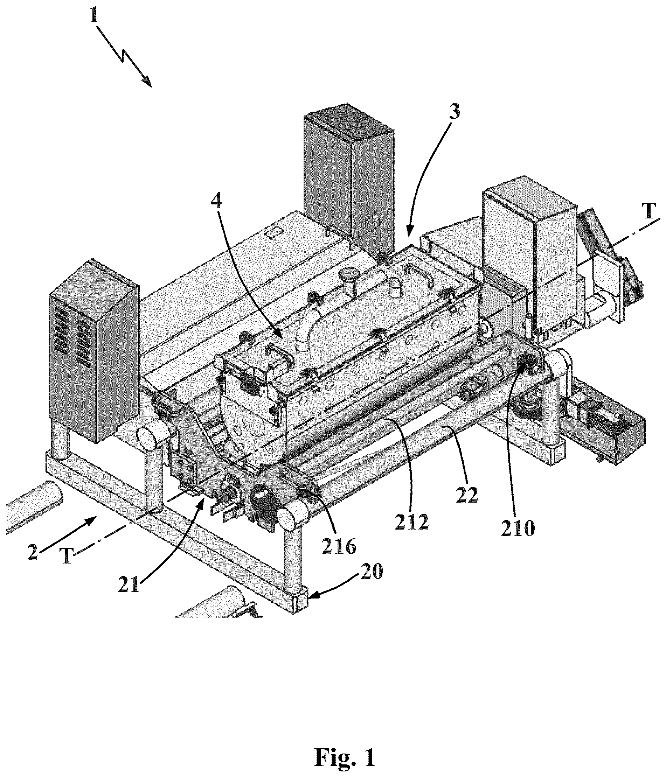

- figure 1 illustrates a perspective view of a metering machine according to the present invention, in accordance with a first embodiment;

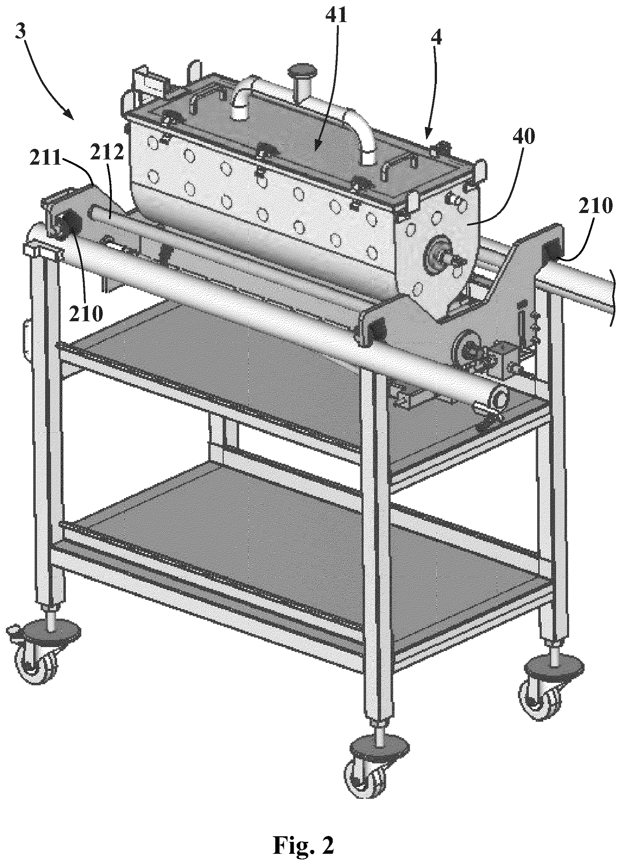

- figure 2 shows a second perspective view of the metering machine of figure 1 mounted on a trolley;

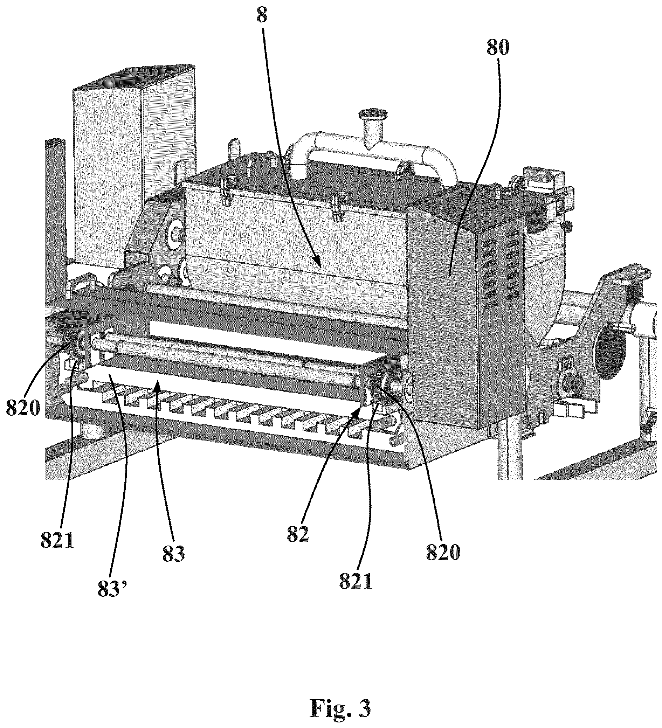

- figure 3 illustrates a sectional view of the metering machine of figure 1, in particular showing actuation means;

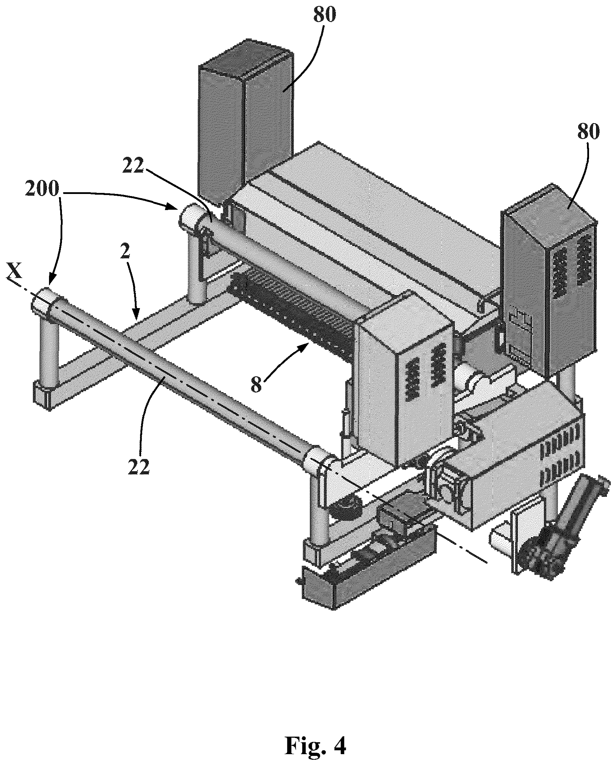

- figure 4 illustrates a perspective view of a support structure of the metering machine of figure 1, with a metering group extracted;

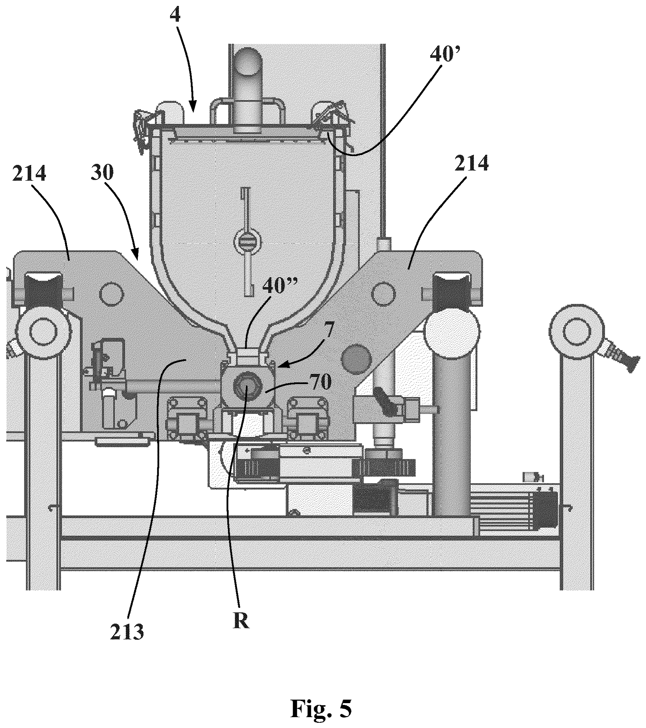

- figure 5 illustrates a sectional view of a hopper and of hydraulic connection means of the metering machine of figure 1;

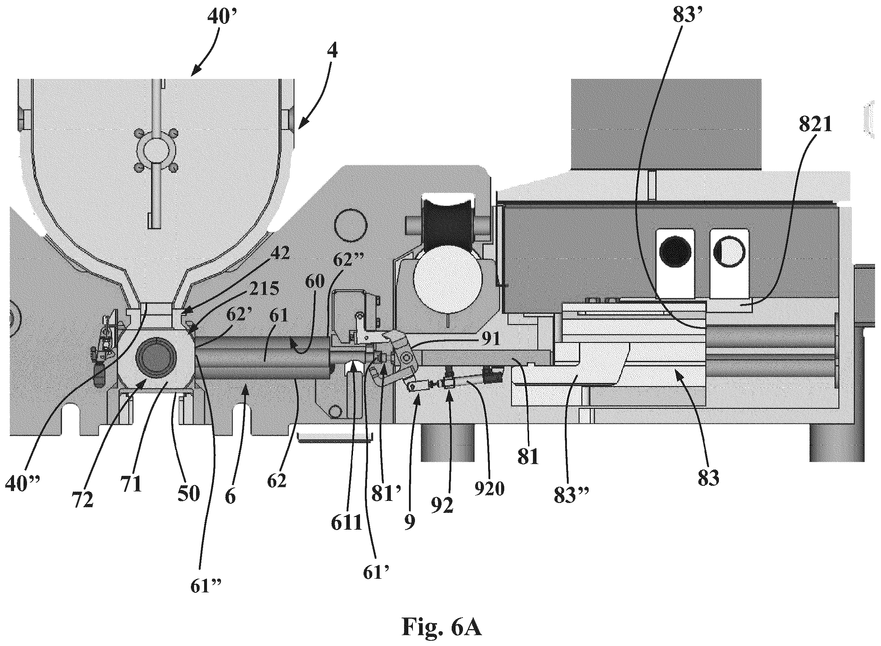

- figure 6A illustrates a sectional view of coupling means, actuation means and pistons of the metering machine of figure 1;

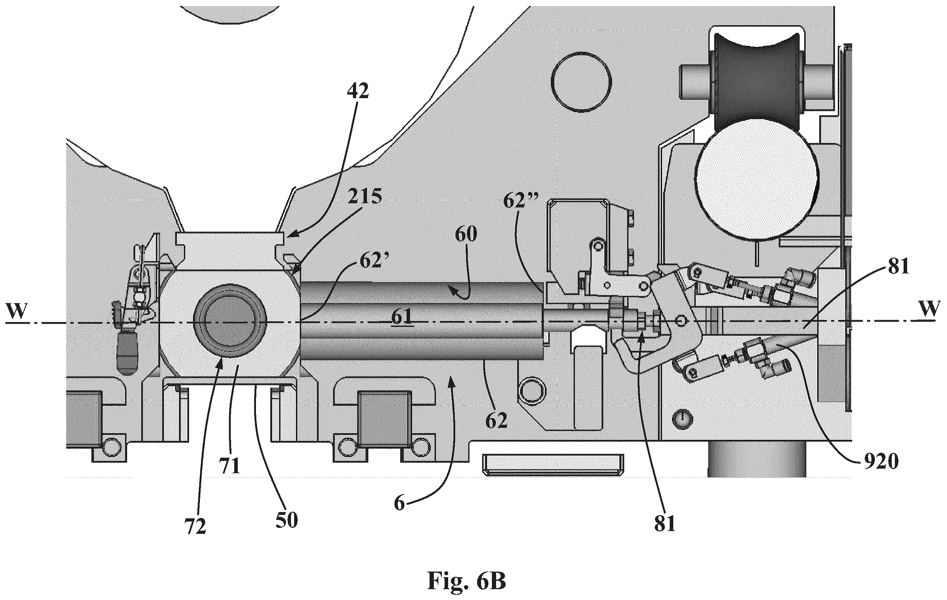

- figure 6B illustrates an enlargement of a portion of figure 6A;

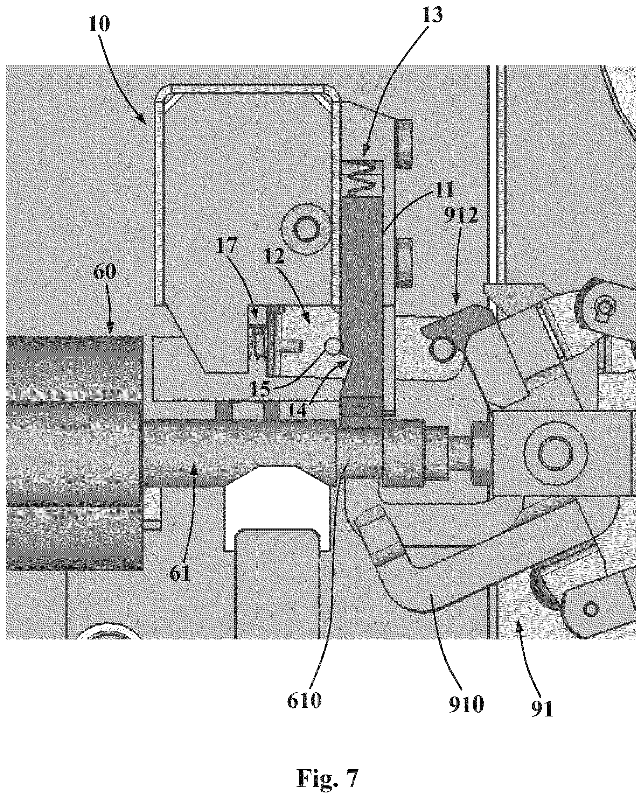

- figure 7 illustrates a further enlargement of a portion of figure 6B;
- figure 8 illustrates a perspective view of a metering machine according to a second embodiment, in particular suitable for injecting a food product.

### Detailed description of a preferred embodiment

With reference to the enclosed drawings, reference number 1 overall indicates the metering machine for metering food products, object of the present invention.

The metering machine 1, object of the present invention, is intended to treat food products made of doughs/pastes of various consistency and composition, such as for example doughs, mixtures, batter for cakes and filling, e.g. for pie bottoms.

More in detail, the metering machine 1, object of the present invention, is advantageously adapted to distribute a measured dose of a dough/paste food product, preferably with low viscosity, in particular for the preparation of cookies, muffins, cakes and cupcakes.

More in detail the metering machine 1 is configured for depositing the aforesaid measured dose of dough on a conveyor belt, not represented, for the subsequent steps of preparation and baking/cooking so as to obtain a finished food product.

The metering machine 1 is also advantageously adapted for injecting a measured dose of food products, such as for example cream, chocolate, marmalade or garnishes in general, within an already-baked food product, such as for example croissants or the like.

For such purpose the metering machine 1, object of the present invention, is preferably intended to be installed in a line for the production of finished products of food type, in particular confectionary products.

In accordance with the invention the metering machine 1 for metering food products comprises a support structure 2, preferably made of metal, and a metering group 3 mechanically connected to the support structure 2 and comprising at least one hopper 4, mechanically supported by the support structure 2 and arranged for containing at least one food product.

Advantageously the support structure 2 comprises a fixed structure 20, which is preferably provided with guide means 200, and a movable structure 21, which is mechanically and removably connected to the guide means 200 of the fixed structure 20 and movable along the aforesaid guide means 200 in order to be separated from the fixed structure 20 along an extraction direction T.

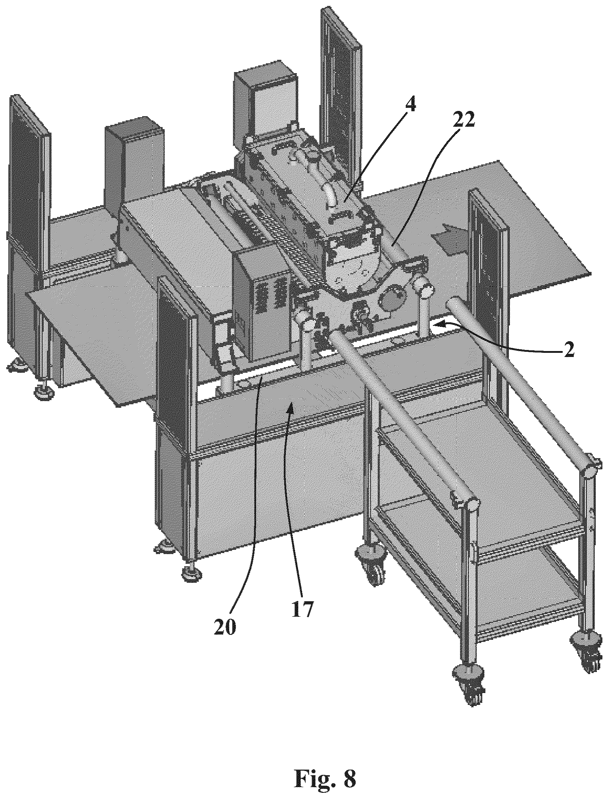

Advantageously, in the event in which the metering machine 1 is intended to inject food products, as set forth above, the fixed structure 20 is mounted on a support base 17 and is movable with respect to the latter, in particular at least vertically, away from and close to the conveyor belt, so as to move the entire metering machine 1 with respect to the conveyor belt on which it is placed, so as to allow the operations of injection of the garnish within the food product, as better illustrated in figure 8.

The metering group 3 also comprises a plurality of dispensing nozzles, not represented in the enclosed figures, hydraulically connected to the hopper 4 in order to dispense the food product, and a plurality of pistons 6 for the volumetric dispensing of the food product, and such pistons 6 are mechanically connected to the support structure 2, preferably to the movable structure 21, and hydraulically selectively connectable to the hopper 4 and to the dispensing nozzles.

Advantageously, in particular in the event in which the metering machine 1 is employed for injecting food products, a corresponding injection syringe is mounted on each dispensing nozzle, such syringe extended towards the conveyor belt in order to intercept a food product and allow the injection of a garnish at its interior. The dispensing nozzles and the possible injection syringes are well-known to the man skilled in the art, depend on the type of food product to be metered and on the shape that one wishes to obtain on the finished product and therefore will not be described in detail hereinbelow.

Each piston 6 comprises a containment chamber 60 and a stem 61 slidably and sealingly inserted within the containment chamber 60 and movable along a rectilinear slide direction W (e.g. substantially horizontal) between a suction position, in which the stem 61 suctions the food product, and a dispensing position, in which the stem 61 forces the food product towards the plurality of nozzles.

More in detail, the stem 61 is susceptible of suctioning the food product during the entire movement thereof between the dispensing position and the suction position and analogously the stem 61 is susceptible of dispensing the food product during the entire movement thereof between the suction position and the dispensing position.

The metering machine 1 also comprises actuation means 8, mounted on the support structure 2, preferably on the fixed structure 20, and comprising a plurality of first actuator elements 81, mechanically connectable to the stems 61 in order to move them between the suction position and the dispensing position.

The first actuator elements 81 are advantageously provided with a head end 81' which is preferably tapered, while the stems 61 are advantageously provided with a rear end 61' which is provided with a housing depression, within which the head end 81' of the first actuator element 81 is susceptible of being at least partially housed in order to define an at least partial shape coupling between the stem 61 and the first actuator element 81.

In accordance with the preferred embodiment, the actuation means 8 advantageously comprise at least one rotary motor 80, preferably a brushless electric motor, and motion transformation means 82, which are interposed between the rotary motor 80 and the first actuator elements 81 in order to transform the rotary motion of the motor 80 into a linear motion of the first actuator elements 81, in particular along the slide direction W of the stem 61 of the corresponding piston 60.

Otherwise, without departing from the protective scope of the present invention, the actuation means 8 can advantageously comprise a pneumatic or hydraulic piston, which is mechanically connected to the first actuator elements 81 in order to move them linearly.

In accordance with the aforesaid preferred embodiment, the motion transformation means 82 advantageously comprise a toothed wheel 820, integral in rotation with the rotor of the rotary motor 80, and a rack 821, coupled to the toothed wheel 820 in order to receive a rotary motion from the latter and transform it into a linear motion. Advantageously moreover the actuation means 8 comprise a trolley 83, which is extended between a first end 83', fixed to the rack 821, and a second end 83", at which the first actuator elements 81 are mounted, preferably fixed, preferably equidistant from each other along the entire transverse extension of the trolley 83. The trolley 83 advantageously comprises a guide portion, which is integral with the support structure 2, and a movable portion, fixed to the rack 821, slidably engaged with the guide portion and on which the first actuator elements 81 are mounted. **In** this manner the first actuator elements 81 are moved in a manner synchronized with each other and can be moved by means of a single rotary motor 80.

Advantageously, in accordance with the preferred embodiment, the actuation means 8 comprise two rotary motors 80 and the motion transformation means 82 comprise two toothed wheels 820 and two racks 821, and each of such toothed wheels 820 and racks 821 is associated with a separate rotary motor 80.

More in detail, the rotary motors 80 are preferably placed laterally with respect to the trolley 83, on opposite sides of the latter and such arrangement allows a greater stability of the system and a more precise and secure movement.

The metering machine 1 also comprises a plurality of coupling means 9, each of which comprising at least one coupling element 91, movable between a coupling position, in which it mechanically connects together a corresponding first actuator element 81 and a corresponding stem 61 of a piston 6 and an uncoupling position, in which it mechanically disconnects the corresponding first actuator element 81 and the corresponding stem 61 of a piston 6 from each other.

Each of the coupling means 9 also comprises an actuator element 92, mechanically connected to one of the coupling elements 91 in order to move it between the coupling position and the uncoupling position.

Advantageously each coupling element 91 is mechanically connected to a corresponding first actuator element 81 and selectively engageable with a corresponding stem 61 in order to render the first actuator element 81 and the stem 61 integral with each other when the coupling element 91 is in the coupling position.

More in detail, each said coupling element 91 is mechanically connected to a corresponding first actuator element 81 by means of at least one first hinge and mechanically connected to a corresponding actuator element 92 by means of a second hinge, in order to be actuated in rotation by the latter between the coupling position and the uncoupling position.

In particular with the term "hinge", it must be intended connections adapted to allow at least one component for rotating one element with respect to the other, including also rotational-translational movements due for example to the engagement of a follower within a cam.

Advantageously each actuator element 92 comprises a linear actuator, such as for example a pneumatic or hydraulic piston, comprising a fixed element 920 fixed to the first actuator element 81, and a movable element 921, movable with respect to the fixed element and connected to a corresponding coupling element 91 in order to move it between the coupling position and the uncoupling position.

Advantageously the metering machine 1 comprises multiple coupling elements 91, side-by-side each other along a flanking direction T substantially orthogonal to the slide direction W of the pistons 6. Preferably, each of the coupling elements 91 comprises an upper portion, placed above the slide direction W, and a lower portion, opposite the upper portion with respect to the slide direction W. Advantageously the actuator elements 92 are fixed with the movable element 921 alternately (along the flanking direction T) to the upper portion and to the lower portion of the coupling elements 91.

Advantageously the coupling elements 91 comprise a coupling portion 910 provided with a curved profile, preferably substantially hook-like, and each stem 61 comprises a coupling groove 610, engageable by the coupling portion 910 of the coupling element 91, in order to render integral in translation the first actuator elements 81 and the stem 61.

In accordance with the preferred embodiment, the coupling groove 610 is preferably made at the rear end 61' of the stem 61, outside the containment chamber 60. Preferably the aforesaid coupling groove 610 is made along the entire external circumference of the stem 61.

Advantageously the coupling portion 910 of the coupling elements 91 is provided with two prongs, spaced from each other, and the coupling groove 610 of the stem 61 is made on an external surface of the stem 61 and is engageable by the two prongs of the coupling portion 910, on diametrically opposite sides of the stem 61, in order to render integral in translation the first actuator elements 81 and the stem 61.

Advantageously each coupling means 9 comprises at least one blocking device 10, which is provided with a blocking element 11, mounted on the support structure 2 and selectively engageable with a corresponding stem 61.

More in detail, each blocking element 11 is fixed to a common connection body, preferably with tubular shape, which is fixed to the support structure 2.

Advantageously the blocking element 11 is movable, preferably along a direction substantially orthogonal to the slide direction W, between a blocking position, in which it engages a corresponding stem 61, and preferably its coupling groove 610, in order to constrain it to the support structure 2, in particular to the movable structure 21, and prevent the movement of the stem 61 between the dispensing position and the suction position, and a release position, in which it disengages the stem 61, and in particular its coupling groove 610, in order to allow the aforesaid movement.

More in detail, the blocking devices 10 comprise first elastic elements 13, each of which interposed between the support structure 2, preferably between the movable structure 21, and a blocking element 11.

Each first elastic element 13 advantageously exerts an elastic force on the blocking element 11 in order to move it constantly towards the aforesaid blocking position. Advantageously, in the blocking position, the blocking elements 11 at least partially engage the coupling groove 610 made on the corresponding stem 61, in a manner such to prevent its translation along the slide direction W.

Advantageously each blocking device 10 comprises a plurality of stop elements 12, mounted on the support structure 2 and movable, preferably along a direction substantially parallel to the slide direction W, between a stop position, in which the stop element 12 prevents the movement of the blocking element 11 towards the blocking position, and a release position, in which the stop element 12 allows the movement of the blocking element 11 towards the blocking position.

Advantageously the blocking elements 11 are provided with a lateral wall, which is directed in the same direction as a front end 61" of the corresponding stem 61 (opposite the rear end 61' of the latter) and on which an engagement seat 14 is advantageously made, which is extended in a depression on the aforesaid lateral wall, preferably along a direction substantially parallel to the slide direction W. Each stop element 12 is advantageously provided with an abutment element 15, which is susceptible of engaging the aforesaid engagement seat 14 in order to prevent the movement of the blocking element 11 towards the blocking position.

Each stop element 12 is preferably connected to the support structure 2, and still more preferably to the movable structure 21. The blocking devices 10 advantageously comprise second elastic elements 17, which are interposed between a corresponding stop element 12 and the support structure 2, and preferably the movable structure 21. More in detail, the second elastic elements 17 exert an elastic force on the corresponding stop element 12 in order to move it constantly towards the aforesaid stop position.

Advantageously each coupling element 91 is provided with an actuation portion 912, configured for cooperating with a corresponding stop element 12 when the coupling element 91 is moved between the coupling position and the uncoupling position, in order to move the blocking element 11 from the release position to the blocking position.

More in detail, the actuation portion 912 is extended opposite the coupling portion 910, with respect to the first hinge placed to connect between the coupling element 91 and the first actuator element 81.

In operation, therefore, the aforesaid actuation portion 912 is configured for cooperating with the stop element 12 in order to disengage the abutment element 15 of the stop element 12 from the engagement seat 14 of the blocking element 11, allowing the movement of the latter towards the blocking position. In this manner, the movement of the coupling element 91 from the coupling position to the uncoupling position corresponds with the movement of the blocking element 11 from the release position to the blocking position.

On the contrary, the coupling portion 910 of the coupling element 91 is configured for cooperating with the blocking element 11, when the coupling element 91 is moved by the corresponding actuator element 92, in order to disengage the blocking element 11 from the coupling groove 610 of the stem 61 and allow its movement from the blocking position to the release position. In this manner, following the movement of the coupling element 91 from the uncoupling position to the coupling position, there corresponds the movement of the blocking element 11 from the blocking position to the release position. As set forth above, the support structure 2 advantageously comprises a fixed structure 20, and a movable structure 21, removably connected to the guide means 200 of the fixed structure 20.

In particular, with the term "fixed" (referred to the fixed structure 20) it is advantageously to be intended that the fixed structure 20 is fixed with respect to the movable structure 21, i.e. the fixed structure 20 is considered to be a fixed reference system for the movable structure 21, in the sense that the support structure 2 is considered inserted in a reference system where the fixed structure 20 is assumed stopped.

The support structure 2, and in particular the fixed structure 20, is in fact advantageously intended to be abutted against the ground, preferably within an industrial plant for the production of food products. In particular, since the metering machine 1 is preferably placed within an automated line for producing food products, the support structure 2 is advantageously movable in order to allow an easy reorganization of the aforesaid automated line.

In particular, the support structure 2 can support moving members such as for example pistons, as specified hereinbelow.

The guide means 200 are preferably extended along a first main extension direction X. Advantageously the metering group 3 is mounted on the movable structure 21 of the support structure 2, in order to be advantageously movable with respect to the fixed structure 20 of the support structure 2 and be separated from the latter so as to be transferred into a suitable dedicated site for the normal cleaning operations of the metering group 3. This advantageously allows facilitating the aforesaid cleaning operations since, in addition to reducing the weight to be transported, it simplifies the separation of the metering group 3 from the fixed structure 20 of the support structure 2 and therefore allows reducing the machine stop time, thus increasing the productivity thereof.

More in detail, the movable structure is movable between an operating position A and a maintenance position B.

More in detail, in the operative position A, the metering group 3 is engaged with the support structure 2 for metering the food product while in the aforesaid maintenance position B the metering group 3 is placed distal from the aforesaid operative position A and is at least partially disengaged from the fixed structure 20 of the support structure 2, such that it can be separated from the latter in order to be able to be transferred towards the cleaning site.

Advantageously, the guide means 200 of the fixed structure 20 comprise at least two first rails 22, which are preferably parallel to each other and are extended substantially parallel to the first extension direction X.

The movable structure 21 advantageously comprises at least two slide elements 210, each of which slidably associated with one of the first rails 22 of the fixed structure 20, in order to guide the movement of the movable structure 21.

Advantageously the movable structure 21 comprises a first and a second main support element 211, which are placed preferably orthogonal to the first extension direction X, substantially parallel to and spaced from each other.

The movable structure 21 also advantageously comprises at least one stiffening element 212, preferably tubular, extended substantially parallel to the first extension direction X, interposed between the two main support elements 211 and fixed to the latter. Preferably, in accordance with the preferred embodiment, each main support element 211 of the movable structure 21 has substantially plate-like shape, is advantageously provided with a central portion 213 and with two lateral arms 214, which are extended laterally projecting from the central portion 213, in particular from opposite sides of the latter. Preferably, the two lateral arms 214 are extended from the central portion 213 along a direction that is tilted with respect to the latter and away from the ground, with at least one component oriented vertically. **In** addition the two lateral arms 214 are extended preferably projectingly from an upper end of the central portion 213 and preferably each of the two lateral arms 214 carries mounted thereon at least one of the slide elements 210.

Advantageously, the movable structure 21 is therefore shaped in a manner such that, when it is mounted on the fixed structure 20, the central portion 213 of the main support element 211 is placed substantially below the rails 22.

The movable structure 21 advantageously comprises two stiffening elements 212, each of which if preferably interposed between two lateral arms 214 of two opposite main support elements 211.

The movable structure 21 also advantageously comprises at least one support element 215, substantially tubular, which is fixed between two opposite main support elements 211, preferably between the two central portions 213 of the aforesaid main support elements 211.

The movable structure preferably comprises four slide elements 210, including two front slide elements 210, mounted on two opposite lateral arms 214 of the first main support element 211, and two rear slide elements 210, mounted on two opposite lateral arms 214 of the secondo main support element 211.

More in detail, each slide element 210 is rotatably connected to the corresponding lateral arm 214, for example by means of a rotatable pin, and is susceptible of being placed in abutment against a corresponding prima rail 22 in order to slide on the latter and allow the sliding of the movable structure 21 along the fixed structure 20.

Preferably the first rails 22 have cylindrical shape and are therefore provided with an external slide surface that is substantially cylindrical.

Each slide element 210 advantageously comprises a slide roller, which is preferably provided with an external abutment surface intended to slide on the corresponding first rail.

Preferably each slide roller 210 comprises a central abutment portion, substantially cylindrical and provided with a first external diameter, and two lateral guide portions, flanked on opposite sides to the aforesaid central abutment portion and provided with a second external diameter greater than the first external diameter of the central abutment portion. In this manner, each slide roller 210 defines an external abutment surface that is substantially counter-shaped with respect to the external slide surface of the first rail 22 and is therefore laterally guided along a direction substantially orthogonal to the extraction direction T, during its sliding along the aforesaid first rail 22 along the extraction direction T.

Of course, without departing from the protective scope of the present invention, the slide elements 210 can comprise wheels or equivalent slidable elements, i.e. for example a roller shaped in a single body with concave lateral profile.

The movable structure 21 also comprises at least one grip handle 216, and preferably two grip handles 216, each of which is preferably made at a separate lateral arm 214 of the main support element 211 and is fixed to the corresponding lateral arm 214 in order to facilitate the movement of the metering group 3 along the extraction direction T and in order to facilitate its lifting.

Advantageously the hopper 4 is mechanically connected to the support element 215 of the movable structure 21 and is preferably placed in abutment against the latter.

The hopper 4 advantageously comprises a central body 40, at least partially blind and internally defining a containment volume for containing the food product to be metered, and such central body 40 is extended preferably tapered between an upper access mouth 40' and a lower discharge mouth 40". Preferably, the hopper 4 comprises a closure cover 41, placed above the central body 40, at least as a partial closure of the access mouth 40' of the central body 40 and of the containment volume. The cover 41 is also advantageously provided with at least one opening that is hydraulically connectable, for example by means of a duct, preferably metallic, to a container of the food product to be metered. Preferably the cover 41 comprises two separate openings, each of which hydraulically connectable to the tank or alternatively to two different tanks, each susceptible of containing a separate food product to be metered.

In particular, in the event in which the central body 40 is hydraulically connectable by means of two separate openings to two tanks containing food products to be metered, the hopper 4 is advantageously provided with at least one separator partition, not illustrated, placed within the central body 40 in order to separate the containment volume inside the central body 40 into two half-volumes, one for each food product to be metered.

Of course, it is also possible that the hopper 4 be susceptible of containing more than two food products to be metered and for such purpose the cover 41 can comprise a suitable number of openings and the hopper 4 be provided with a suitable number of separator partitions.

The hopper 4 advantageously comprises a closure plate 42, placed below the central body 40 and advantageously fixed thereto. The closure plate 42 is preferably provided with a central cavity that is counter-shaped with respect to the discharge mouth 40" of the central body 40 in order to allow the passage of the food product to be metered from the central body 40.

The closure plate 42 is advantageously abutted against the support element 215 of the movable structure 21 and mechanically connected to the latter, preferably by means of a mechanical snap coupling device well-known to the man skilled in the art and therefore not described in detail hereinbelow.

Advantageously the dispensing nozzles are mechanically connected to the movable structure 21 and each of these preferably defines a dispensing opening. More in detail, the dispensing nozzles are preferably mechanically connected to the support element 215 of the movable structure 21 of the support structure 2, below the latter and hence preferably opposite the hopper 4 with respect to the same support element 215.

For such purpose the support element 215 is preferably a tubular element, which is preferably provided with a square or circular section.

The tubular element of the support element 215 is advantageously internally at least partially hollow and defines an internal housing volume, in order to allow the passage of the food product to be metered from the hopper 4 towards the dispensing nozzles.

The metering group 4 advantageously comprises a support body 50, preferably with substantially plate-like form, on which the plurality of dispensing nozzles is mounted, spaced from each other and preferably equidistant along the support body 50. Advantageously, the support body 50 is extended along a direction substantially parallel to the first main extension direction X, preferably for the entire length of the central body 40 of the hopper 4.

The support body 50 is preferably slidably connected on the lower part to the support element 215 such to be easily removed from the latter in order to be substituted or be washed at the end of the metering of the food product.

For such purpose, the support element 215 is advantageously provided with two longitudinal retention shoulders, not shown, which are extended along a direction substantially parallel to the first main extension direction X, while the support body 50 is preferably provided with two opposite retention shoulders, counter-shaped with respect to the slide shoulders of the support element 215 and susceptible of slidably engaging the latter in order to retain the support body 50 connected, preferably substantially hung, to the support element 215.

The pistons 6 are advantageously mechanically connected to the support element 215, on a lateral face of the latter which is preferably orthogonal to the faces of the support element 215 facing the hopper 4 and the dispensing nozzles.

Each piston 6 advantageously comprises a jacket 62, preferably with cylindrical form, which at its interior defines the aforesaid containment chamber 60. Each jacket 62 is advantageously fixed to the support element 215, for example by means of welding, and the jackets 62 are preferably placed spaced from each other, preferably along the entire extension of the support element 215.

Advantageously each dispensing nozzle 5 corresponds with a piston 6 and then a jacket 62, which is preferably aligned with the corresponding dispensing nozzle 5 along the support element 215.

Each jacket 62 is advantageously extended between a front opening 62' and an opposite rear opening 62", within which stem 61 is at least partially housed, which is slidable within the aforesaid jacket 62. The stem 61 is substantially inserted to size within the containment chamber 60 defined by the jacket 62. In particular, the jacket 62 defines an internal surface, which laterally delimits the containment chamber 60 while the stem 61 defines an external surface, which is preferably placed in abutment against the internal surface of the jacket 62 in order to prevent the food product that is situated within the containment chamber 60 from exiting outward, and in particular leaking, towards the rear opening 62" of the jacket 62.

For such purpose, the stem 61 can be provided with a seal element, for example a gasket, preferably annular, which is pressed against the internal surface of the jacket 62 in order to improve the hydraulic seal of the aforesaid stem 61 - jacket 62 coupling and still more preferably is extended also on a front face of the stem 61.

Each stem 61 is extended advantageously between a head portion, which is housed within the containment chamber 60 of the jacket 62, and a shank portion 611, preferably with elongated shape, which is placed at least partially outside the aforesaid containment chamber 60.

Advantageously the metering group 3 also comprises hydraulic connection means 7 mechanically connected to the movable structure, hydraulically interposed between the hopper 4, the containment chambers 60 of the pistons 6 and the dispensing nozzles in order to selectively place the containment chambers 60 in hydraulic communication with the hopper 4 and with the dispensing nozzles.

More in detail, the hydraulic connection means 7 advantageously comprise at least one three-way valve 70. Advantageously the three-way valve 70 is extended along a second main extension direction Y, which is substantially parallel to the first main extension direction X. The three-way valve 70 is preferably housed within the internal housing volume of the support element 215. More in detail, at least one main support element 211 is provided with an insertion opening, which is communicating with the internal housing volume of the support element 215 and is susceptible of being at least partially traversed by the three-way valve 70 in order to allow the housing thereof within the aforesaid support element 215.

The three-way valve 70 is advantageously rotatably connected to the support structure 2, preferably to the movable structure 21, and is rotatable around a first rotation axis R between at least one first position, in which the three-way valve 70 is placed as a hydraulic connection between the containment chamber 60 of the pistons 6 and the hopper 4, and a second position, in which the three-way valve 70 is placed as a hydraulic connection between the containment chamber 60 of the pistons 6 and the dispensing nozzles.

The metering machine thus conceived therefore attains the pre-established objects.

## Claims

1. Metering machine for metering and/or injecting food products, which comprises:
- a support structure (2);
- a metering group (3) mechanically connected to said support structure (2) and comprising:
- at least one hopper (4) for containing at least one food product, mechanically supported by said support structure (2);
- a plurality of dispensing nozzles hydraulically connected to said hopper (4) in order to dispense said food product;
- a plurality of pistons (6) for the volumetric dispensing of the food product, mechanically connected to said support structure (2) and hydraulically selectively connectable to said hopper (4) and to said dispensing nozzles;
each said piston (6) comprising a containment chamber (60) and a stem (61) slidably and sealingly inserted within said containment chamber (60) and movable, along a rectilinear slide direction (W), between a suction position, in which said stem (61) suctions said food product, and a dispensing position, in which said stem (61) forces said food product towards said plurality of nozzles (5);
- actuation means (8), mounted on said support structure (2), comprising a plurality of first actuator elements (81) mechanically connectable to said stems (61) in order to move them between said suction position and said dispensing position;
**characterised in that** it further comprises
- a plurality of coupling means (9), each of which comprises:
- at least one coupling element (91), which is movable between a coupling position in which it mechanically connects together a corresponding first actuator element (81) and a corresponding stem (61) of a piston (6), and an uncoupling position in which it mechanically disconnects said corresponding first actuator element (81) and said corresponding stem (61) of a piston (6) from each other;
- at least one actuator element (92), mechanically connected to the corresponding said coupling element (91) in order to move it between said coupling position and said uncoupling position.

2. Metering machine according to claim 1, **characterized in that** each said coupling element (91) is mechanically connected to a corresponding said first actuator element (81) and selectively engageable with a corresponding said stem (61) in order to render said first actuator element (81) and said stem (61) integral with each other when said coupling element (91) is in said coupling position.

3. Metering machine according to claim 1 or 2, **characterized in that** each of said actuator elements (92) comprise a linear actuator, comprising a fixed element (920) fixed to said first actuator element (81), and a movable element (921), movable with respect to said fixed element (920) and connected to a corresponding coupling element (91) in order to move it between said coupling position and said uncoupling position.

4. Metering machine according to claim 3, **characterized in that** each said coupling element (91) is mechanically connected to a corresponding said first actuator element (81) by means of at least one first hinge and mechanically connected to a corresponding said actuator element (92) by means of a second hinge, in order to be actuated in rotation by the latter between said coupling position and said uncoupling position.

5. Metering machine according to claim 3 or 4, **characterized in that** it comprises multiple coupling elements (91), side-by-side each other along a flanking direction (T) substantially orthogonal to the slide direction (W) of said pistons (6) and each of which comprising an upper portion, placed above said slide direction (W), and a lower portion, opposite said upper portion with respect to said slide direction (W);
said actuator elements (92) being fixed with said movable element (921) alternately to the upper portion and to the lower portion of said coupling elements (91).

6. Metering machine according to any one of the preceding claims, **characterized in that** said coupling elements (91) comprise a coupling portion (910) provided with a curved profile;
each said stem (61) comprising a coupling groove (610), engageable by the coupling portion (910) of said coupling element (91), in order to render integral in translation said first actuator elements (81) and said stem (61).

7. Metering machine according to claim 6, **characterized in that** the coupling portion (910) of said coupling elements (91) is provided with two prongs, spaced from each other;
the coupling groove (610) of said stem (61) being made on an external surface of said stem (61) and being engageable by the two prongs of said coupling portion (910), from diametrically opposite sides of said stem (61), in order to render integral in translation said first actuator elements (81) and said stem (61).

8. Metering machine according to any one of the preceding claims, **characterized in that** each of said coupling means (9) comprises at least one blocking device (10), provided with a blocking element (11) which is mounted on said support structure (2) and selectively engageable with a corresponding stem (61);
said blocking element (11) being movable between a blocking position, in which it engages a corresponding said stem (61) in order to constrain it to said support structure (2) and prevent the movement of said stem (61) between said dispensing position and said suction position, and a release position, in which it disengages said stem (61) in order to allow the aforesaid movement.

9. Metering machine according to claim 8, **characterized in that** said blocking device (10) comprises a stop element (12), mounted on said support structure (2) and movable between a stop position, in which said stop element (12) prevents the movement of said blocking element (11) towards said blocking position, and a release position, in which said stop element (12) allows moving said blocking element (11) towards said blocking position.

10. Metering machine according to claim 9, **characterized in that** each said coupling element (91) is provided with an actuation portion (912), configured for cooperating with said stop element (12) when said coupling element (91) is moved between said coupling position and said uncoupling position, in order to move said blocking element (11) from said release position to said blocking position.

## Patentansprüche

1. Dosiermaschine zum Dosieren und/oder Injizieren von Nahrungsmitteln, die Folgendes umfasst:
- eine Stützstruktur (2);
- eine Dosiergruppe (3), die mechanisch mit der Stützstruktur (2) verbunden ist und Folgendes umfasst:
- mindestens einen Trichter (4) zum Enthalten eines Nahrungsmittels, der mechanisch durch die Stützstruktur (2) gestützt wird;
- eine Vielzahl von Ausgabedüsen, die hydraulisch mit dem Trichter (4) verbunden sind, um das Nahrungsmittel auszugeben;
- eine Vielzahl von Kolben (6) zum volumetrischen Ausgeben des Nahrungsmittels, die mechanisch mit der Stützstruktur (2) verbunden und hydraulisch wahlweise mit dem Trichter (4) und den Ausgabedüsen verbindbar sind,
wobei ein jeder Kolben (6) eine Aufnahmekammer (60) und eine Kolbenstange (61) umfasst, die verschiebbar und abdichtend in die Aufnahmekammer (60) eingefügt und entlang einer geraden Verschieberichtung (W) zwischen einer Saugposition, in der die Kolbenstange (61) das Nahrungsmittel ansaugt, und einer Ausgabeposition, in der die Kolbenstange (61) das Nahrungsmittel hinführend zu der Vielzahl von Düsen (5) forciert, bewegbar ist;
- Betätigungsmittel (8), die auf der Stützstruktur (2) montiert sind, umfassend eine Vielzahl von ersten Aktuatorelementen (81), die mechanisch mit den Kolbenstangen (61) verbindbar sind, um diese zwischen der Saugposition und der Ausgabeposition zu bewegen,
**dadurch gekennzeichnet, dass** sie ferner Folgendes umfasst:
- eine Vielzahl von Kupplungsmitteln (9), von denen ein jedes Folgendes umfasst:
- mindestens ein Kupplungselement (91), das zwischen einer Kupplungsposition, in der es ein entsprechendes erstes Aktuatorelement (81) und eine entsprechende Kolbenstange (61) eines Kolbens (6) mechanisch miteinander verbindet, und einer Entkupplungsposition, in der es das entsprechende erste Aktuatorelement (81) und die entsprechende Kolbenstange (61) eines Kolbens (6) mechanisch voneinander trennt, bewegbar ist;
- mindestens ein Aktuatorelement (92), das mechanisch mit dem entsprechenden Kupplungselement (91) verbunden ist, um dieses zwischen der Kupplungsposition und der Entkupplungsposition zu bewegen.

2. Dosiermaschine nach Anspruch 1, **dadurch gekennzeichnet, dass** ein jedes Kupplungselement (91) mechanisch mit einem entsprechenden ersten Aktuatorelement (81) verbunden ist und wahlweise mit einer entsprechenden Kolbenstange (61) in Eingriff gelangen kann, um zu bewirken, dass das erste Aktuatorelement (81) und die Kolbenstange (61) fest miteinander verbunden werden, wenn sich das Kupplungselement (91) in der Kupplungsposition befindet.

3. Dosiermaschine nach Anspruch 1 oder 2, **dadurch gekennzeichnet, dass** ein jedes der Aktuatorelemente (92) einen Linearaktuator umfasst, umfassend ein fixes Element (920), das an dem ersten Aktuatorelement (81) fixiert ist, und ein bewegbares Element (921), das in Bezug auf das fixe Element (920) bewegbar und mit einem entsprechenden Kupplungselement (91) verbunden ist, um dieses zwischen der Kupplungsposition und der Entkupplungsposition zu bewegen.

4. Dosiermaschine nach Anspruch 3, **dadurch gekennzeichnet, dass** ein jedes Kupplungselement (91) mechanisch mit einem entsprechenden ersten Aktuatorelement (81) mittels mindestens eines ersten Gelenks verbunden und mechanisch mit einem entsprechenden Aktuatorelement (92) mittels eines zweiten Gelenks verbunden ist, um durch Letzteres zwischen der Kupplungsposition und der Entkupplungsposition in Drehung versetzt zu werden.

5. Dosiermaschine nach Anspruch 3 oder 4, **dadurch gekennzeichnet, dass** sie mehrere Kupplungselemente (91) umfasst, die entlang einer ersten Flankierrichtung (T) im Wesentlichen rechtwinkelig zur Verschieberichtung (W) der Kolben (6) nebeneinander angeordnet sind und von denen ein jedes einen oberen Abschnitt, der über der Verschieberichtung (W) platziert ist, und einen unteren Abschnitt, der in Bezug auf die Verschieberichtung (W) dem oberen Abschnitt entgegengesetzt ist, umfasst,
wobei die Aktuatorelemente (92) mit dem bewegbaren Element (921) abwechselnd an dem oberen Abschnitt und an dem unteren Abschnitt der Kupplungselemente (91) fixiert sind.

6. Dosiermaschine nach einem der vorhergehenden Ansprüche, **dadurch gekennzeichnet, dass** die Kupplungselemente (91) einen Kupplungsabschnitt (910) umfassen, der mit einem gekrümmten Profil versehen ist,
wobei eine jede Kolbenstange (61) eine Kupplungsnut (610) umfasst, die durch den Kupplungsabschnitt (910) des Kupplungselements (91) eingegriffen werden kann, um zu bewirken, dass die ersten Aktuatorelemente (81) und die Kolbenstange (61) bei der translatorischen Verschiebung fest miteinander verbunden sind.

7. Dosiermaschine nach Anspruch 6, **dadurch gekennzeichnet, dass** der Kupplungsabschnitt (910) der Kupplungselemente (91) mit zwei Zinken versehen ist, die voneinander beabstandet sind,
wobei die Kupplungsnut (610) der Kolbenstange (61) auf einer externen Oberfläche der Kolbenstange (61) ausgebildet ist und durch die beiden Zinken des Kupplungsabschnitts (910) von diametral entgegengesetzten Seiten der Kolbenstange (61) eingegriffen werden kann, um zu bewirken, dass die ersten Aktuatorelemente (81) und die Kolbenstange (61) bei der translatorischen Verschiebung fest miteinander verbunden sind.

8. Dosiermaschine nach einem der vorhergehenden Ansprüche, **dadurch gekennzeichnet, dass** die Kupplungsmittel (9) mindestens eine Blockiervorrichtung (10) umfassen, die mit einem Blockierelement (11) versehen ist, das auf der Stützstruktur (2) montiert ist und wahlweise mit einer entsprechenden Kolbenstange (61) in Eingriff gelangen kann,
wobei das Blockierelement (11) zwischen einer Blockierposition, in der es mit einer entsprechenden Kolbenstange (61) im Eingriff ist, um diese an der Stützstruktur (2) zu befestigen und die Bewegung der Kolbenstange (61) zwischen der Ausgabeposition und der Saugposition zu vermeiden, und einer Freigabeposition, in der es die Kolbenstange (61) löst, um die genannte Bewegung zu erlauben, bewegbar ist.

9. Dosiermaschine nach Anspruch 8, **dadurch gekennzeichnet, dass** die Blockiervorrichtung (10) ein Stoppelement (12) umfasst, das auf der Stützstruktur (2) montiert und zwischen einer Stoppposition, in der das Stoppelement (12) die Bewegung des Blockierelements (11) hinführend zur Blockierposition verhindert, und einer Freigabeposition, in der das Stoppelement (12) das Bewegen des Blockierelements (11) hinführend zur Blockierposition erlaubt, bewegbar ist.

10. Dosiermaschine nach Anspruch 9, **dadurch gekennzeichnet, dass** ein jedes Kupplungselement (91) mit einem Betätigungsabschnitt (912) versehen ist, der ausgelegt ist, um mit dem Stoppelement (12) zu kooperieren, wenn das Kupplungselement (91) zwischen der Kupplungsposition und der Entkupplungsposition bewegt wird, um das Blockierelement (11) von der Freigabeposition in die Blockierposition zu bewegen.

## Revendications

1. Machine de dosage pour doser et/ou injecter des produits alimentaires, qui comprend :
- une structure de support (2) ;
- un groupe de dosage (3) connecté mécaniquement à ladite structure de support (2) et comprenant :
- au moins une trémie (4) pour contenir au moins un produit alimentaire, supportée mécaniquement par ladite structure de support (2) ;
- une pluralité de buses de distribution connectées de manière hydraulique à ladite trémie (4) de manière à distribuer ledit produit alimentaire ;
- une pluralité de pistons (6) pour la distribution volumétrique du produit alimentaire, connectés mécaniquement à ladite structure de support (2) et connectables de manière hydraulique et sélective à ladite trémie (4) et auxdites buses de distribution ;
chacun desdits pistons (6) comprenant une chambre de confinement (60) et une tige (61) insérée de manière coulissante et étanche à l'intérieur de ladite chambre de confinement (60) et mobile, le long d'une direction de coulissement rectiligne (W), entre une position d'aspiration, dans laquelle ladite tige (61) aspire ledit produit alimentaire, et une position de distribution, dans laquelle ladite tige (61) force ledit produit alimentaire vers ladite pluralité de buses (5) ;
- des moyens d'actionnement (8), montés sur ladite structure de support (2), comprenant une pluralité de premiers éléments actionneurs (81) pouvant être connectés mécaniquement auxdites tiges (61) de manière à les déplacer entre ladite position d'aspiration et ladite position de distribution ;
**caractérisée en ce qu'**elle comprend en outre :
- une pluralité de moyens de couplage (9), dont chacun comprend :
- au moins un élément de couplage (91), qui est mobile entre une position de couplage dans laquelle il connecte mécaniquement ensemble un premier élément actionneur correspondant (81) et une tige correspondante (61) d'un piston (6), et une position de découplage dans laquelle il déconnecte mécaniquement ledit premier élément actionneur correspondant (81) et ladite tige correspondante (61) d'un piston (6) l'un de l'autre ;
- au moins un élément actionneur (92), connecté mécaniquement audit élément de couplage correspondant (91) de manière à le déplacer entre ladite position de couplage et ladite position de découplage.

2. Machine de dosage selon la revendication 1, **caractérisée en ce que** chaque dit élément de couplage (91) est connecté mécaniquement à un dit premier élément actionneur correspondant (81) et peut s'engager de manière sélective avec une dite tige correspondante (61) de manière à rendre ledit premier élément actionneur (81) et ladite tige (61) solidaires l'un de l'autre lorsque ledit élément de couplage (91) est dans ladite position de couplage.

3. Machine de dosage selon la revendication 1 ou 2, **caractérisée en ce que** chacun desdits éléments actionneurs (92) comprend un actionneur linéaire, comprenant un élément fixe (920) fixé audit premier élément actionneur (81), et un élément mobile (921), mobile par rapport audit élément fixe (920) et connecté à un élément de couplage correspondant (91) de manière à le déplacer entre ladite position de couplage et ladite position de découplage.

4. Machine de dosage selon la revendication 3, **caractérisée en ce que** chaque dit élément de couplage (91) est connecté mécaniquement à un dit premier élément actionneur correspondant (81) au moyen d'au moins une première charnière et connecté mécaniquement à un dit élément actionneur correspondant (92) au moyen d'une seconde charnière, afin d'être actionné en rotation par ce dernier entre ladite position de couplage et ladite position de découplage.

5. Machine de dosage selon la revendication 3 ou 4, **caractérisée en ce qu'**elle comprend plusieurs éléments de couplage (91), côte à côte le long d'une direction latérale (T) sensiblement orthogonale à la direction de coulissement (W) desdits pistons (6) et dont chacun comprend une portion supérieure, placée au-dessus de ladite direction de coulissement (W), et une portion inférieure, opposée à ladite portion supérieure par rapport à ladite direction de coulissement (W) ;
lesdits éléments actionneurs (92) étant fixés avec ledit élément mobile (921) alternativement à la portion supérieure et à la portion inférieure desdits éléments de couplage (91).

6. Machine de dosage selon l'une quelconque des revendications précédentes, **caractérisée en ce que** lesdits éléments de couplage (91) comprennent une portion de couplage (910) munie d'un profil incurvé ;
chacune desdites tiges (61) comprenant une rainure de couplage (610), pouvant être engagée par la portion de couplage (910) dudit élément de couplage (91), de manière à rendre solidaires en translation lesdits premiers éléments actionneur (81) et ladite tige (61).

7. Machine de dosage selon la revendication 6, **caractérisée en ce que** la portion de couplage (910) desdits éléments de couplage (91) est munie de deux dents, espacées l'une de l'autre ;
la rainure de couplage (610) de ladite tige (61) étant réalisée sur une surface externe de ladite tige (61) et pouvant être engagée par les deux dents de ladite portion de couplage (910), à partir de côtés diamétralement opposés de ladite tige (61), de manière à rendre solidaires en translation lesdits premiers éléments actionneurs (81) et ladite tige (61).

8. Machine de dosage selon l'une quelconque des revendications précédentes, **caractérisée en ce que** chacun desdits moyens de couplage (9) comprend au moins un dispositif de blocage (10), muni d'un élément de blocage (11) qui est monté sur ladite structure de support (2) et peut être engagé de manière sélective avec une tige correspondante (61) ;
ledit élément de blocage (11) étant mobile entre une position de blocage, dans laquelle il engage une dite tige correspondante (61) de manière à la contraindre à ladite structure de support (2) et empêcher le mouvement de ladite tige (61) entre ladite position de distribution et ladite position d'aspiration, et une position de libération, dans laquelle il dégage ladite tige (61) de manière à permettre le mouvement susmentionné.

9. Machine de dosage selon la revendication 8, **caractérisée en ce que** ledit dispositif de blocage (10) comprend un élément d'arrêt (12), monté sur ladite structure de support (2) et mobile entre une position d'arrêt, dans laquelle ledit élément d'arrêt (12) empêche le mouvement dudit élément de blocage (11) vers ladite position de blocage, et une position de libération, dans laquelle ledit élément d'arrêt (12) permet de déplacer ledit élément de blocage (11) vers ladite position de blocage.

10. Machine de dosage selon la revendication 9, **caractérisée en ce que** chaque dit élément de couplage (91) est pourvu d'une portion d'actionnement (912), configurée pour coopérer avec ledit élément d'arrêt (12) lorsque ledit élément de couplage (91) est déplacé entre ladite position de couplage et ladite position de découplage, de manière à déplacer ledit élément de blocage (11) de ladite position de libération à ladite position de blocage.
